(19) Europäisches Patentamt
European Patent Office
Office européen des brevets

(11) **EP 3 181 659 B1**

(12) **EUROPÄISCHE PATENTSCHRIFT**

(45) Veröffentlichungstag und Bekanntmachung des Hinweises auf die Patenterteilung:
**03.06.2020 Patentblatt 2020/23**

(51) Int Cl.:
*C09K 11/78* (2006.01)          *D21H 21/48* (2006.01)
*B41M 3/06* (2006.01)           *C09D 11/50* (2014.01)
*G07D 7/12* (2016.01)           *B42D 25/23* (2014.01)
*B42D 25/29* (2014.01)          *B42D 25/00* (2014.01)
*B42D 25/24* (2014.01)          *B42D 25/47* (2014.01)
*B42D 25/355* (2014.01)         *G07D 7/1205* (2016.01)

(21) Anmeldenummer: **16204439.0**

(22) Anmeldetag: **06.07.2005**

(54) **WERTDOKUMENT**

VALUABLE DOCUMENT

PAPIER-VALEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.07.2004 DE 102004034189**

(43) Veröffentlichungstag der Anmeldung:
**21.06.2017 Patentblatt 2017/25**

(62) Dokumentnummer(n) der früheren Anmeldung(en) nach Art. 76 EPÜ:
**05759941.7 / 1 836 273**

(73) Patentinhaber: **Giesecke+Devrient Currency Technology GmbH**
**81677 München (DE)**

(72) Erfinder:
• **SCHWENK, Gerhard**
**82178 Puchheim (DE)**
• **GRAUVOGL, Gregor**
**82041 Oberhaching (DE)**
• **MAGG, Ulrich**
**85221 Dachau (DE)**
• **SCHOLZ, Ulrich**
**84428 Buchbach (DE)**

(74) Vertreter: **Klunker IP Patentanwälte PartG mbB Destouchesstraße 68 80796 München (DE)**

(56) Entgegenhaltungen:
EP-A- 1 241 242          WO-A-03/104533
DE-A1- 10 056 462        US-B1- 6 506 476

**Beschreibung**

Die Erfindung betrifft ein Wertdokument und ein Sicherheitselement mit zumindest einem Lumineszenzstoff als Echtheitsmerkmal. Die Erfindung betrifft auch verschiedene Verfahren zur Prüfung der Echtheit eines derartigen Wertdokuments und Sicherheitselementes. Beschrieben werden außerdem ein Sicherheitspapier mit dem Lumineszenzstoff und Verfahren zur Herstellung des Sicherheitselements, Wertdokuments und Sicherheitspapiers.

Unter Sicherheitspapier wird nachfolgend Papier verstanden, das z.B. bereits mit Sicherheitselementen, wie Wasserzeichen, Sicherheitsfaden, Hologrammpatch usw., ausgestattet ist, aber noch nicht umlauffähig ist und Zwischenprodukt bei der Herstellung des Wertdokumentes ist. Unter Wertdokument wird das umlauffähige Produkt verstanden.

Unter der Bezeichnung "Wertdokument" sind im Rahmen der Erfindung Banknoten, Schecks, Aktien, Wertmarken, Ausweise, Kreditkarten, Pässe und auch andere Dokumente sowie Etiketten, Siegel, Verpackungen oder andere Elemente für die Produktsicherung zu verstehen.

Die Absicherung von Wertdokumenten gegen Fälschung mittels lumineszierender Substanzen ist bereits seit langem bekannt. In der EP 0 052 624 B2 werden beispielsweise lumineszierende Substanzen auf der Basis von mit Seltenerdmetallen dotierten Wirtsgittern verwendet.

WO 03/104533 A1 offenbart Lumineszenzstoffe zur Verwendung als Lasermaterialien und Szintillatormaterialien. Offenbart werden unter anderem Yttrium-Ytterbium-Niobate und Yttrium-Ytterbium-Tantalate. Die Lumineszenzstoffe liegen als Einkristalle vor.

EP 1 241 242 A2 offenbart Anti-Stokes-Leuchtstoffe für die Anwendung in Sicherheitsdokumenten. Die Anti-Stokes-Leuchtstoffe sind Oxisulfide.

US 6,506,476 B1 offenbart Granate und Perowskite, die jeweils Eisen oder Chrom enthalten, zur Echtheitssicherung von Wertdokumenten.

Vorzugsweise werden Stoffe verwendet, bei denen entweder die Absorption oder die Emission außerhalb des sichtbaren Spektralbereichs liegen.

Liegen die Emissionen bei Wellenlängen zwischen ca. 400 nm und ca. 700 nm, so sind die lumineszierenden Substanzen bei geeigneter Anregung mit dem Auge nachweisbar. Für manche Anwendungen ist dies erwünscht, z.B. bei der Echtheitsüberprüfung durch Beleuchtung mit UV-Licht. Für andere Anwendungen ist es hingegen von Vorteil, wenn die Emission außerhalb des sichtbaren Spektralbereichs liegt, da dann spezielle Detektoren zum Nachweis der Stoffe notwendig sind.

Lumineszenzstoffe mit charakteristischen Eigenschaften, die sich zur Absicherung von Wertdokumenten und insbesondere für eine automatische Echtheitserkennung eignen, sind jedoch in ihrer Zahl beschränkt. Die meisten anorganischen und organischen Lumineszenzstoffe haben uncharakteristische, breite Spektren, eine zu geringe Emissionsintensität und sind überdies oft handelsüblich. Dies erschwert ihre Identifizierung und macht die gleichzeitige Verwendung mehrerer dieser Stoffe unpraktikabel.

Ausgehend von diesem Stand der Technik liegt der Erfindung die Aufgabe zugrunde, Wertdokumente mit Echtheitsmerkmalen in Form von Lumineszenzstoffen, die sich als Echtheitsmerkmal für Wertdokumente eignen, zu schaffen, die sich von Wertdokumenten mit bisher bekannten Lumineszenzstoffen durch ein charakteristisch abgeändertes Anregungs- und/ oder Emissionsspektrum unterscheiden.

Die Lösung dieser Aufgabe ergibt sich aus den unabhängigen Ansprüchen. Weiterbildungen sind Gegenstand der Unteransprüche.

Erfindungsgemäß wird zur Absicherung mindestens ein Lumineszenzstoff verwendet. Bevorzugt liegt dessen Emissionsspektrum im sichtbaren oder infraroten Spektralbereich (VIS, IR). Besonders bevorzugt emittiert der Lumineszenzstoff im Nahen Infrarot (NIR). Bevorzugt erfolgt auch die Anregung im Nahen Infrarot.

Je nach eingesetztem Lumineszenzstoff kann die Emissionsbande der Stokesschen oder Antistokesschen Regel folgen oder es kann Quasiresonanz beobachtet werden.

Die für die erfindungsgemäße Echtheitsabsicherung geeigneten Stoffe sind Lumineszenzstoffe der allgemeinen Formel

$$XZO_4$$

wobei

X für $Sc_a\ Y_b\ La_c\ Ce_d\ Pr_e\ Sm_g\ Eu_h\ Tb_k\ Dy_l\ Ho_m\ Tm_o\ Sb(III)r\ Bi_s\ Cr_t\ Mn(III)_u\ Fe(III)_v$
und

Z für $Nb_{za}\ Ta_{zb}$

steht und

$$a + b + c + d + e + g + h + k + l + m + o + r + s + t + u + v = 1$$

und

a, b, c, d, e, g, h, k, l, m, o, r, s, t, u, v jeweils von 0 bis 1 reichen und

$$za + zb = 1$$

und

za, zb jeweils von 0 bis 1 reichen.

Die für X und Z aufgelisteten Symbole entsprechen den Symbolen im Periodensystem der Elemente, O steht für Sauerstoff.

Die X-Elemente Sc, Y, La, Ce, Pr, Sm, Eu, Tb, Dy, Ho, Tm, Sb, Bi und Cr weisen dabei die Oxidationsstufe 3 auf.

Die X-Elemente Mn und Fe weisen dabei die Oxidationsstufe 2 und/ oder 3 auf.

Die Z-Elemente Nb, Ta weisen dabei die Oxidationsstufe 5 auf.

Selbstverständlich ist es möglich, einzelne X - und/ oder Z - Elemente durch weitere Elemente, wie z.B. Indium (In), Aluminium (Al), Magnesium (Mg) und Chrom (Cr), zu ersetzen, solange die stöchiometrischen Verhältnisse berücksichtigt werden und das Kristallgitter dies zulässt. Insbesondere sind Dotierungen mit Chrom und Aluminium bzw. mit Magnesium und Aluminium bevorzugt.

In einer bevorzugten Ausführungsform liegt als X - Element zumindest La oder Y oder beide vor, d.h. es gilt, dass in der allgemeinen Formel $b \neq 0$ und / oder $c \neq 0$. Selbstverständlich können auch alle anderen X - Elemente oder nur ausgewählte davon zusätzlich vorliegen. Insbesondere gilt hierfür $k \neq 0$ und / oder $o \neq 0$.

In einer weiter bevorzugten Ausführungsform steht X für $Y_b La_c$ und b + c = 1 und 0 < b < 1 und 0 < c < 1. In diesem Falle liegen nur die beide Elemente La und Y als X - Elemente in der lumineszierenden Substanz vor.

Weiter bevorzugt ist, dass X für La oder für Y steht, d.h. dass nur ein X - Element in der allgemeinen Formel vorhanden ist.

In einer anderen bevorzugten Ausführungsform steht X für $Y_b La_c Pr_e Dy_l Ho_m Cr_t Mn(III)_u Fe(III)_v$ und es gilt

$$b + c + e + l + m + t + u + v = 1$$

und

b, c, e, l, m, t, u, v reichen jeweils von 0 bis 1.

Weiterhin ist bevorzugt, wenn im erfindungsgemäßen Lumineszenzstoff wenigstens ein, wenigstens zwei oder wenigstens drei Seltenerdelemente als X - Elemente vorliegen, d.h. dass $c \neq 0$ und / oder $d \neq 0$ und / oder $e \neq 0$ und / oder $g \neq 0$ und / oder $h \neq 0$ und / oder $k \neq 0$ und / oder $l \neq 0$ und / oder $m \neq 0$ und / oder $o \neq 0$.

Insbesondere ist das Seltenerdelement Ho, d.h $m \neq 0$. Besonders bevorzugt liegt bei Anwesenheit von Ho auch Y vor.

Ist gemäß der allgemeinen Formel Ho vorhanden, also wenn $m \neq 0$, dann liegt vorzugsweise auch Pr, Dy, Cr, Mn und / oder Fe vor, womit gilt $e \neq 0$ und / oder $l \neq 0$ und / oder $t \neq 0$ und / oder $u \neq 0$ und / oder $v \neq 0$.

In einer weiteren bevorzugten Ausführungsform steht X für $Y_b La_c Pr_e Fe(III)_v$ und b + c + e + v = 1 und b, c, e und v reichen jeweils von 0 bis 1.

Weiter bevorzugt steht X für $Y_b Pr_e$, b + e = 1, b, e reichen jeweils von 0 bis 1, vorzugsweise gilt 0 < b < 1 und 0 < e < 1.

Weiter bevorzugt steht X für $Y_b Fe(III)_v$, b + v = 1, b und v reichen jeweils von 0 bis 1, vorzugsweise gilt 0 < b < 1 und 0 < v < 1.

Weiter bevorzugt steht X für Y.

Z steht für $Nb_{za} Ta_{zb}$, wobei za + zb = 1 und za und zb jeweils von 0 bis 1 reichen, vorzugsweise gilt 0 < za < 1 und 0 < zb < 1. In dieser Ausführungsform liegen Niobat-Tantalat-Mischungen vor.

Bevorzugt sind auch Verbindungen mit der folgenden Formel:
$Y_b La_c Nb_{za} Ta_{zb} O_4$, wobei b + c = 1, za + zb = 1 und b, c, za und zb jeweils von 0 bis 1 reichen.

Eine besonders bevorzugte Verbindung ist $YNbO_4$.

Die Lagen und Formen (Intensität, Breite etc.) der Anregungs- und/oder Emissionsbanden sind abhängig von den Mengenverhältnissen der beteiligten Elemente, der Art der Elemente und der Art und Menge der Dotierstoffe.

Für die Absicherung von Wertdokumenten können sowohl breitbandige als auch schmalbandige Lumineszenz verwendet werden, aus Gründen der Selektivität wird jedoch die schmalbandige Lumineszenz bevorzugt.

Von Schmalbandigkeit einer Emission spricht man üblicherweise dann, wenn im Emissionsspektrum die auftretenden Banden eine mittlere Halbwertsbreite von kleiner 50 nm zeigen. Dies bedeutet jedoch nicht, dass Banden, die eine Halbwertbreite außerhalb dieses Bereichs aufweisen, nicht auch die erfindungsgemäße Aufgabe lösen.

Durch Variation und Kombination der oben beschriebenen Lumineszenzstoffe eröffnen sich zahlreiche Möglichkeiten, die Anregungs- und Emissionsspektren dieser Lumineszenzstoffe zu beeinflussen und so eine Vielzahl von Sicherheitsmerkmalen zu produzieren. Neben der Auswertung der Anregungs- und/ oder Emissionsspektren kann ebenso die Lumineszenzlebensdauer bzw. Abklingzeit zur Unterscheidung herangezogen werden. Bei der Auswertung können neben den Wellenlängen der Anregungs- bzw. Emissionslinien auch deren Anzahl und/ oder Form und/ oder deren Intensitäten berücksichtigt werden, womit sich eine beliebige Codierung darstellen lässt.

Ebenso ist es möglich, bei bestimmten der Lumineszenzstoffe einen Energieübertrag zwischen gleichen und/ oder ungleichen Elementen zu erreichen, d.h. eine Quasiresonanz zu erzeugen, und für die Identifizierung zu nutzen.

Wird das Wertdokument statt mit einer mit mehreren der oben beschriebenen lumineszierenden Substanzen markiert, so lässt sich die Anzahl der unterscheidbaren Kombinationen weiter steigern. Werden zudem verschiedene Mischungsverhältnisse voneinander unterschieden, kann die Anzahl an Kombinationen nochmals gesteigert werden. Die Markierung kann dabei entweder an verschiedenen Stellen des Wertdokuments oder am gleichen Ort erfolgen. Wird der Lumineszenzstoff an verschiedenen Stellen des Wertdokumentes auf- bzw. eingebracht, kann so ein räumlicher Code, im einfachsten Fall z.B. ein Barcode, erzeugt werden.

Weiterhin lässt sich die Fälschungssicherheit des Wertdokuments erhöhen, wenn die spezielle gewählte lumineszierende Substanz z.B. in einem Wertdokument mit anderen Informationen des Wertdokuments verknüpft wird, so dass eine Überprüfung mittels eines geeigneten Algorithmus möglich ist. Selbstverständlich kann das Wertdokument neben der oben beschriebenen lumineszierenden Substanz noch weitere zusätzliche Echtheitsmerkmale, wie klassische Fluoreszenz und/ oder Magnetismus, aufweisen.

Die lumineszierenden Substanzen können auf verschiedenste Art und Weise in das Wertdokument eingebracht werden. So können die lumineszierenden Substanzen beispielsweise in eine Druckfarbe eingebracht werden. Aber auch ein Zumischen der lumineszierenden Substanz zur Papiermasse oder Kunststoffmasse bei der Herstellung eines Wertdokuments auf der Basis von Papier oder Kunststoff ist möglich. Ebenso können die lumineszierenden Substanzen auf oder in einem Kunststoffträgermaterial vorgesehen werden, welches beispielsweise wiederum zumindest teilweise in die Papiermasse eingebettet werden kann. Das Trägermaterial, das auf einem geeigneten Polymer, wie z.B. PMMA, basiert und in das die oben beschriebene lumineszierende Substanz eingebettet ist, kann hierbei die Form eines Sicherheitsfadens, einer Melierfaser oder einer Planchette haben. Ebenso lässt sich zur Produktsicherung die lumineszierende Substanz z.B. direkt in das Material des abzusichernden Gegenstandes, z.B. in Gehäusen und Plastikflaschen einbringen.

Das Kunststoff- oder Papierträgermaterial kann jedoch auch an jedem beliebigen anderen Gegenstand z.B. zur Produktsicherung befestigt werden. Das Trägermaterial ist in diesem Fall vorzugsweise in Form eines Etiketts ausgebildet. Wenn das Trägermaterial Bestandteil des zu sichernden Produkts ist, wie es z.B. bei Aufreißfäden der Fall ist, ist selbstverständlich auch jede andere Formgebung möglich. In bestimmten Anwendungsfällen kann es sinnvoll sein, die lumineszierende Substanz als unsichtbare Beschichtung auf dem Wertdokument vorzusehen. Sie kann dabei vollflächig oder auch in Form von bestimmten Mustern, wie z.B. Streifen, Linien, Kreisen, oder auch in Form von alphanumerischen Zeichen vorliegen. Um die Unsichtbarkeit des Lumineszenzstoffes zu gewährleisten, kann erfindungsgemäß entweder ein farbloser Lumineszenzstoff in der Druckfarbe oder dem Beschichtungslack verwendet werden oder ein farbiger Lumineszenzstoff in einer so geringen Konzentration, dass die Transparenz der Beschichtung gerade noch gegeben ist. Alternativ oder zusätzlich kann auch das Trägermaterial bereits geeignet eingefärbt sein, so dass farbige Lumineszenzstoffe aufgrund ihrer Eigenfarbe nicht wahrgenommen werden.

Üblicherweise werden die oben beschriebenen lumineszierenden Substanzen in Form von Pigmenten verarbeitet. Zur besseren Verarbeitung oder zur Erhöhung ihrer Stabilität können die Pigmente insbesondere als individuell verkapselte Pigmentpartikel vorliegen oder mit einem anorganischen oder organischen Coating überzogen werden. Beispielsweise werden die einzelnen Pigmentteilchen hierzu mit einer Silicathülle umgeben und lassen sich so leichter in Medien dispergieren. Ebenso können verschiedene Pigmentpartikel einer Kombination gemeinsam verkapselt werden, z.B. in Fasern, Fäden, Silicathüllen. So ist es z.B. nicht mehr möglich, den "Code" der Kombination nachträglich zu verändern. Unter "Verkapselung" ist dabei ein vollständiges Umhüllen der Pigmentpartikel zu verstehen, während mit "Coating" auch das teilweise Umhüllen bzw. Beschichten der Pigmentpartikel gemeint ist.

Die oben beschriebenen Lumineszenzstoffe zeichnen sich insbesondere durch ihre hohe Intensität im Emissionsspektrum und der einfachen Herstellung aus. Des Weiteren weisen diese Lumineszenzstoffe den Vorteil auf, dass bereits durch einfache Variation in der elementaren Zusammensetzung die Lage der Emissionsbanden beeinflusst wird und so eine Vielzahl von unterscheidbaren Merkmalsstoffen zur Verfügung gestellt wird.

Im Folgenden werden einige Beispiele zur Herstellung lumineszierender Substanzen näher erläutert. Beispiel 6 betrifft eine bei der vorliegenden Erfindung zu verwendende Substanz. Die übrigen Beispiele dienen lediglich der Erläuterung von Herstellung und Verwendung von Lumineszenzstoffen.

Für die Präparation werden die Ausgangsstoffe in oxidischer Form oder Stoffe, die in Oxide überführt werden können, in einem geeigneten Verhältnis gemischt, dann geglüht, zerkleinert, gewaschen (z.B. mit Wasser), getrocknet und vermahlen.

Beispiel 1: $Y_{0,1}Yb_{0,9}TaO_4$ (zur Veranschaulichung)

539,46 g $Ta_2O_5$, 27,57 g $Y_2O_3$, 432,97 g $Yb_2O_3$ und 500,00 g $Na_2SO_4$ (reinst, wasserfrei) als Flussmittel werden in einem Paddelmischer innig durchmischt. Das Mischgut wird in einen Tiegel gefüllt und bei 1150 °C 6 bis 24 Stunden geglüht. Das nach Abschalten des Ofens 1 bis 2 Tage abgekühlte Material wird durch Waschen vom Sulfat befreit und mit einer gängigen Stiftmühle auf Feinheit gemahlen, die eine homogene und unsichtbare Einbringung in Papier oder Druckfarben ermöglicht.

Die so hergestellte Verbindung weist die Summenformel $Y_{0,1}Yb_{0,9}TaO_4$ auf.

Beispiel 2: $Y_{2,4}Yb_{0,3}Nd_{0,3}CaAlNb_2O_{12}$ (zur Veranschaulichung)

| Komponente | Menge | Stoff | Reinheit |
|---|---|---|---|
| 1 | 359,660 g | $Y_2O_3$ | 5 N |
| 2 | 78,46 g | $Yb_2O_3$ | 4 N |
| 3 | 66,988 g | $Nd_2O_3$ | 4 N |
| 4 | 74,431 g | CaO | p.a. |
| 5 | 67,662 g | $Al_2O_3$ | 4 N |
| 6 | 352,80 g | $Nb_2O_5$ | 4 N |
| 7 | 1000,00 g | $Na_2SO_4$ | (reinst) |

Die Komponenten 1 bis 7 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{2,4}Yb_{0,3}Nd_{0,3}CaAlNb_2O_{12}$ auf.

Beispiel 3: $Y_{0,65}Yb_{0,18}Er_{0,17}NbO_4$ (zur Veranschaulichung)

| Komponente | Menge | Stoff | Reinheit |
|---|---|---|---|
| 1 | 267,58 g | $Y_2O_3$ | 5 N |
| 2 | 129,31 g | $Yb_2O_3$ | 4 N |
| 3 | 118,543 g | $Er_2O_3$ | 3 N |
| 4 | 484,57 g | $Nb_2O_5$ | 4 N |
| 5 | 1000,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{0,65}Yb_{0,18}Er_{0,17}NbO_4$ auf.

Beispiel 4: $Y_{0,4}Yb_{0,5}Nd_{0,1}NbO_4$ (zur Veranschaulichung)

| Komponente | Menge | Stoff | Reinheit |
|---|---|---|---|
| 1 | 153,92 g | $Y_2O_3$ | 5 N |
| 2 | 335,77 g | $Yb_2O_3$ | 4 N |
| 3 | 57,338 g | $Nd_2O_3$ | 3 N |
| 4 | 452,970 g | $Nb_2O_5$ | 4 N |
| 5 | 1000,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{0,4}Yb_{0,5}Nd_{0,1}NbO_4$ auf.

Beispiel 5: $Y_{0,099}Yb_{0,9}Pr_{0,001}NbO_4$ (zur Veranschaulichung)

| Komponente | Menge | Stoff | Reinheit |
|---|---|---|---|
| 1 | 34,76 g | $Y_2O_3$ | 5 N |
| 2 | 551,44 g | $Yb_2O_3$ | 4 N |
| 3 | 0,51 g | $Pr_6O_{11}$ | 4 N |
| 4 | 413,29 g | $Nb_2O_5$ | 4 N |
| 5 | 1000,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{0,099}Yb_{0,9}Pr_{0,001}NbO_4$ auf.

Beispiel 6: $Y_{0,967}Eu_{0,033}NbO_4$ (erfindungsgemäß zu verwendender Lumineszenzstoff)

| Komponente | Menge | Stoff | Reinheit |
|---|---|---|---|
| 1 | 440,44 g | $Y_2O_3$ | 5 N |
| 2 | 23,42 g | $Eu_2O_3$ | 4 N |
| 3 | 536,14 g | $Nb_2O_5$ | 4 N |
| 4 | 1000,00 g | $Na_2SO_4$ | (reinst) |

Die Komponenten 1 bis 4 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{0,967}Eu_{0,033}NbO_4$ auf.

Beispiel 7: $Y_{2,8}Er_{0,2}Nb_{0,60}Fe_4O_{12}$ (zur Veranschaulichung)

| Komponente | Menge | Stoff | Reinheit |
|---|---|---|---|
| 1 | 419,55 g | $Y_2O_3$ | 5 N |
| 2 | 50,76 g | $Er_2O_3$ | 4 N |
| 3 | 105,83 g | $Nb_2O_5$ | 4 N |
| 4 | 423,86 g | $Fe_2O_3$ | Carbonyleisen |
| 5 | 500,00 g | $Na_2SO_4$ | (reinst) |

Die Komponenten 1 bis 5 werden innig bei hoher Turbulenz gemischt. Das Mischgut wird in Tiegel (Sinterkeramik auf Basis $Al_2O_3$) gefüllt und bei 1150 °C zwischen 6 bis 24 Stunden geglüht. Das nach Abschalten des Ofens über 1 bis 2 Tage abgekühlte Material wird sulfatfrei gewaschen (Nachweisgrenze < 1 mg/l) und mit einer geeigneten Mühle fein gemahlen. Eine homogene Einbringung in das Papier, Kunststoff oder eine geeignete Druckfarbe wird je nach Feinheitsgrad der Mahlung begünstigt.

Die so hergestellte Verbindung weist die Summenformel $Y_{2,8}Er_{0,2}Nb_{0,60}Fe_4O_{12}$ auf.

Weitere Ausführungsformen und Vorteile der Erfindung werden im Folgenden anhand der Figur erläutert. Die in der Figur gezeigten Proportionen entsprechen nicht unbedingt den in der Realität vorliegenden Verhältnissen und dienen vornehmlich zur Verbesserung der Anschaulichkeit.

Es zeigt

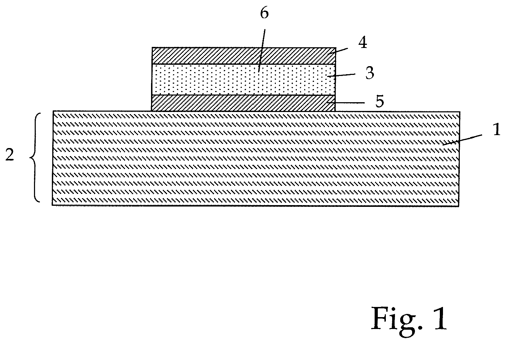

Fig. 1    erfindungsgemäßes Wertdokument im Querschnitt.

Fig. 1 zeigt eine Ausführungsform des erfindungsgemäßen Sicherheitselements. Das Sicherheitselement besteht in diesem Fall aus einem Etikett 2, das sich aus einer Papier- oder Kunststoffschicht 3, einer transparenten Abdeckschicht 4 sowie einer Klebstoffschicht 5 zusammensetzt. Dieses Etikett 2 ist über die Kleberschicht 5 mit einem beliebigen Substrat 1 verbunden. Bei diesem Substrat 1 kann es sich um Wertdokumente, Ausweise, Pässe, Urkunden oder dergleichen, aber auch um andere zu sichernde Gegenstände, wie beispielsweise CDs, Verpackungen o. Ä., handeln. Die lumineszierende Substanz 6 ist in diesem Ausführungsbeispiel im Volumen der Schicht 3 enthalten.

Alternativ könnte die lumineszierende Substanz auch in einer nicht gezeigten Druckfarbe enthalten sein, die auf eine der Etikettenschichten, vorzugsweise auf die Oberfläche der Schicht 3 aufgedruckt wird.

Statt den Lumineszenzstoff in oder auf einem Trägermaterial vorzusehen, das anschließend als Sicherheitselement auf einem Gegenstand befestigt wird, ist es gemäß der Erfindung auch möglich, die lumineszierende Substanz direkt in das zu sichernde Wertdokument bzw. auf dessen Oberfläche in Form einer Beschichtung vorzusehen.

**Patentansprüche**

1.    Sicherheitselement, umfassend einen Lumineszenzstoff der allgemeinen Formel

$XZO_4$

wobei

X für $Sc_a\, Y_b\, La_c\, Ce_d\, Pr_e\, Sm_g\, Eu_h\, Tb_k\, Dy_l\, Ho_m\, Tm_o\, Sb(III)_r\, Bi_s\, Cr_t\, Mn(III)_u\, Fe(III)_v$
und
Z für $Nb_{za}\, Ta_{zb}$ steht und

$$a + b + c + d + e + g + h + k + l + m + o + r + s + t + u + v = 1$$

und a, b, c, d, e, g, h, k, l, m, o, r, s, t, u und v jeweils von 0 bis 1 reichen und

$$za + zb = 1$$

und
za und zb jeweils von 0 bis 1 reichen,
wobei als X-Element wenigstens ein Seltenerdelement vorliegt.

2. Sicherheitselement nach Anspruch 1, wobei das Sicherheitselement die Form eines Streifens oder Bandes aufweist oder als Sicherheitsfaden, Planchette, Melierfaser oder Etikett ausgebildet ist.

3. Sicherheitselement nach Anspruch 1 oder 2, **dadurch gekennzeichnet, dass** die wenigstens eine lumineszierende Substanz in ein Trägermaterial des Sicherheitselementes eingebettet oder auf das Trägermaterial aufgebracht ist.

4. Wertdokument, umfassend einen Lumineszenzstoff der allgemeinen Formel

$$XZO_4$$

wobei

X für $Sc_a\, Y_b\, La_c\, Ce_d\, Pr_e\, Sm_g\, Eu_h\, Tb_k\, Dy_l\, Ho_m\, Tm_o\, Sb(III)_r\, Bi_s\, Cr_t\, Mn(III)_u\, Fe(III)_v$
und
Z für $Nb_{za}\, Ta_{zb}$ steht und

$$a + b + c + d + e + g + h + k + l + m + o + r + s + t + u + v = 1$$

und a, b, c, d, e, g, h, k, l, m, o, r, s, t, u und v jeweils von 0 bis 1 reichen und

$$za + zb = 1$$

und
za und zb jeweils von 0 bis 1 reichen,
wobei als X-Element wenigstens ein Seltenerdelement vorliegt.

5. Wertdokument nach Anspruch 4, wobei das Wertdokument aus Papier oder Kunststoff besteht.

6. Wertdokument nach Anspruch 4 oder 5, wobei der Lumineszenzstoff in das Volumen des Wertdokumentes eingebracht oder in einer auf dem Wertdokument aufgebrachten Schicht vorliegt.

7. Wertdokument nach wenigstens einem der Ansprüche 4 bis 6, wobei die lumineszierende Substanz einer Druckfarbe zugemischt ist.

8. Wertdokument nach wenigstens einem der Ansprüche 4 bis 7, wobei die lumineszierende Substanz als Pigmentpartikel vorliegt.

9. Sicherheitselement nach wenigstens einem der Ansprüche 1 bis 3 oder Wertdokument nach wenigstens einem der Ansprüche 4 bis 8, wobei in dem Lumineszenzstoff $b \neq 0$ und/ oder $c \neq 0$ und/ oder $k \neq 0$ und/ oder $o \neq 0$.

10. Sicherheitselement nach wenigstens einem der Ansprüche 1 bis 3 oder Wertdokument nach wenigstens einem der Ansprüche 4 bis 8, wobei im Lumineszenzstoff wenigstens zwei Seltenerdelemente als X-Elemente vorliegen.

11. Sicherheitselement oder Wertdokument nach wenigstens einem der Ansprüche 1 bis 10, wobei der Lumineszenzstoff zusätzlich dotiert ist, vorzugsweise mit Al und/ oder Mg und/ oder Cr.

12. Sicherheitselement oder Wertdokument nach wenigstens einem der Ansprüche 1 bis 11, wobei der Lumineszenzstoff zusätzlich dotiert ist mit Aluminium und Magnesium oder mit Aluminium und Chrom.

13. Sicherheitselement oder Wertdokument nach wenigstens einem der Ansprüche 1 bis 12, wobei in dem Lumineszenzstoff $0 < za < 1$ und $0 < zb < 1$.

14. Sicherheitselement oder Wertdokument nach wenigstens einem der Ansprüche 1 bis 12, wobei in dem Lumineszenzstoff Z für Nb mit $za = 1$ oder Ta mit $zb = 1$ steht.

15. Prüfverfahren zur Echtheitsprüfung eines Wertdokumentes nach wenigstens einem der Ansprüche 4 bis 14 oder eines Sicherheitselementes nach wenigstens einem der Ansprüche 1 bis 3 oder 9 bis 14, **dadurch gekennzeichnet, dass** die Lumineszenzlebensdauern und/ oder Wellenlängen und/ oder Anzahl und/ oder die Form und/ oder die Intensitäten der Emissionslinien und/ oder der Anregungsbanden der lumineszierenden Substanzen ausgewertet werden.

**Claims**

1. A security element, comprising a luminescent substance of the general formula

$$XZO_4$$

wherein

X stands for $Sc_a\ Y_b\ La_c\ Ce_d\ Pr_e\ Sm_g\ Eu_h\ Tb_k\ Dy_l\ Ho_m\ Tm_o\ Sb(III)_r\ Bi_s\ Cr_t\ Mn(III)_u\ Fe(III)_v$ and Z stands for $Nb_{za}\ Ta_{zb}$ and

$$a + b + c + d + e + g + h + k + l + m + o + r + s + t + u + v = 1$$

and a, b, c, d, e, g, h, k, l, m, o, r, s, t, u and v each range from 0 to 1 and

$$za + zb = 1$$

and
za and zb each range from 0 to 1,
wherein as the X element at least one rare-earth element is present.

2. The security element according to claim 1, wherein the security element has the form of a strip or band or is configured as a security thread, planchet, mottling fiber or label.

3. The security element according to claim 1 or 2, **characterized in that** the at least one luminescent substance is embedded in a carrier material of the security element or is applied to the carrier material.

4. A value document, comprising a luminescent substance of the general formula

$$XZO_4$$

wherein

X stands for $Sc_a\ Y_b\ La_c\ Ce_d\ Pr_e\ Sm_g\ Eu_h\ Tb_k\ Dy_l\ Ho_m\ Tm_o\ Sb(III)_r\ Bi_s\ Cr_t\ Mn(III)_u\ Fe(III)_v$ and Z stands for $Nb_{za}\ Ta_{zb}$ and

$$a + b + c + d + e + g + h + k + l + m + o + r + s + t + u + v = 1$$

and
a, b, c, d, e, g, h, k, l, m, o, r, s, t, u and v each range from 0 to 1 and

$$za + zb = 1$$

and
za and zb each range from 0 to 1,
wherein as the X element at least one rare-earth element is present.

5. The value document according to claim 4, wherein the value document is composed of paper or plastic.

6. The value document according to claim 4 or 5, wherein the luminescent substance is incorporated into the volume of the value document or present in a layer applied to the value document.

7. The value document according to at least one of claims 4 to 6, wherein the luminescent substance is admixed to a printing ink.

8. The value document according to at least one of claims 4 to 7, wherein the luminescent substance is present as pigment particles.

9. The security element according to at least one of claims 1 to 3 or the value document according to at least one of claims 4 to 8, wherein in the luminescent substance $b \neq 0$ and/or $c \neq 0$ and/or $k \neq 0$ and/or $o \neq 0$.

10. The security element according to at least one of claims 1 to 3 or the value document according to at least one of claims 4 to 8, wherein in the luminescent substance at least two rare-earth elements are present as the X elements.

11. The security element or the value document according to at least one of claims 1 to 10, wherein the luminescent substance is additionally doped, preferably with Al and/or Mg and/or Cr.

12. The security element or the value document according to at least one of claims 1 to 11, wherein the luminescent substance is additionally doped with aluminum and magnesium or with aluminum and chromium.

13. The security element or the value document according to at least one of claims 1 to 12, wherein in the luminescent substance $0 < za < 1$ and $0 < zb < 1$.

14. The security element or the value document according to at least one of claims 1 to 12, wherein in the luminescent substance Z stands for Nb with za = 1 or Ta with zb = 1.

15. A test method for checking the authenticity of a value document according to at least one of the claims 4 to 14 or of a security element according to at least one of the claims 1 to 3 or 9 to 14, **characterized in that** the lifetimes of luminescence and/or wavelengths and/or number and/or the form and/or the intensities of the emission lines and/or the excitation bands of the luminescent substances are evaluated.

**Revendications**

1. Elément de sécurité comprenant une substance luminescente répondant à la formule générale

$$XZO_4$$

X représentant $Sc_a\,Y_b\,La_c\,Ce_d\,Pr_e\,Sm_g\,Eu_h\,Tb_k\,Dy_l\,Ho_m\,Tm_o\,Sb(III)_r\,Bi_s\,Cr_t\,Mn(III)_u\,Fe(III)_v$
et
Z représentant $Nb_{za}\,Ta_{zb}$ et

$$a + b + c + d + e + g + h + k + l + m + o + r + s + t + u + v = 1$$

et

a, b, c, d, e, g, h, k, l, m, o, r, s, t, u et v allant respectivement de 0 à 1, et

$$za + zb = 1$$

et

za et zb allant respectivement de 0 à 1.

cependant que, en tant qu'élément X, il y a au moins un élément de terres rares.

2. Elément de sécurité selon la revendication 1, l'élément de sécurité ayant la forme d'un ruban ou d'une bande ou étant réalisé en tant que fil de sécurité, planchette, fibre chinée ou étiquette.

3. Élément de sécurité selon la revendication 1 ou 2, **caractérisé en ce que** la au moins une substance luminescente est incorporée dans un matériau support de l'élément de sécurité ou est appliquée sur le matériau support.

4. Document de valeur comprenant une substance luminescente répondant à la formule générale,

$$XZO_4$$

X représentant $Sc_a\ Y_b\ La_c\ Ce_d\ Pr_e\ Sm_g\ Eu_h\ Tb_k\ Dy_l\ Ho_m\ Tm_o\ Sb(III)_r\ Bi_s\ Cr_t\ Mn(III)_u\ Fe(III)v$

et

Z représentant $Nb_{za}\ Ta_{zb}$ et

$$a + b + c + d + e + g + h + k + l + m + o + r + s + t + u + v = 1$$

et

a, b, c, d, e, g, h, k, l, m, o, r, s, t, u et v allant respectivement de 0 à 1, et

$$za + zb = 1$$

et

za et zb allant respectivement de 0 à 1.

cependant que, en tant qu'élément X, il y a au moins un élément de terres rares.

5. Document de valeur selon la revendication 4, le document de valeur consistant en du papier ou en de la matière plastique.

6. Document de valeur selon la revendication 4 ou 5, la substance luminescente étant insérée dans le volume du document de valeur ou se trouvant dans une couche appliquée sur le document de valeur.

7. Document de valeur selon au moins une des revendications de 4 à 6, la substance luminescente étant mélangée à une encre d'impression.

8. Document de valeur selon au moins une des revendications de 4 à 7, la substance luminescente se trouvant sous forme de particules de pigment.

9. Élément de sécurité selon au moins une des revendications de 1 à 3 ou document de valeur selon au moins une des revendications de 4 à 8, cependant que, dans la substance luminescente, $b \neq 0$ et/ou $c \neq 0$ et/ou $k \neq 0$ et/ou $o \neq 0$.

10. Élément de sécurité selon au moins une des revendications de 1 à 3 ou document de valeur selon au moins une des revendications de 4 à 8, cependant que, dans la substance luminescente, il y a au moins deux éléments de terres rares en tant qu'éléments X.

11. Élément de sécurité ou document de valeur selon au moins une des revendications de 1 à 10, cependant que la substance luminescente est additionnellement dopée, de préférence au Al et/ou au Mg et/ou au Cr.

**12.** Élément de sécurité ou document de valeur selon au moins une des revendications de 1 à 11, cependant que la substance luminescente est additionnellement dopée à l'aluminium et au magnésium ou à l'aluminium et au chrome.

**13.** Élément de sécurité ou document de valeur selon au moins une des revendications de 1 à 12, cependant que, dans la substance luminescente, $0 < za < 1$ et $0 < zb < 1$.

**14.** Élément de sécurité ou document de valeur selon au moins une des revendications de 1 à 12, cependant que, dans la substance luminescente, Z représente Nb avec $za = 1$ ou Ta avec $zb = 1$.

**15.** Procédé de vérification pour la vérification de l'authenticité d'un document de valeur selon au moins une des revendications de 4 à 14 ou d'un élément de sécurité selon au moins une des revendications de 1 à 3 ou de 9 à 14, **caractérisé en ce que** les longévités de la luminescence et/ou les longueurs d'onde et/ou le nombre et/ou la forme et/ou l'intensité des lignes d'émission et/ou des bandes d'excitation des substances luminescentes sont évalués.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0052624 B2
- WO 03104533 A1
- EP 1241242 A2
- US 6506476 B1